(19) **Europäisches Patentamt / European Patent Office / Office européen des brevets**

(11) **EP 1 375 450 B1**

(12) **EUROPEAN PATENT SPECIFICATION**

(45) Date of publication and mention
of the grant of the patent:
**06.05.2009 Bulletin 2009/19**

(21) Application number: **02708682.6**

(22) Date of filing: **27.03.2002**

(51) Int Cl.:
**C04B 35/632** (2006.01)  **C04B 35/195** (2006.01)
**B28B 3/20** (2006.01)  **B28B 3/26** (2006.01)

(86) International application number:
**PCT/JP2002/002973**

(87) International publication number:
**WO 2002/079117 (10.10.2002 Gazette 2002/41)**

(54) **METHOD FOR MANUFACTURING HONEYCOMB STRUCTURE**

VERFAHREN ZUR HERSTELLUNG WABENFÖRMIGER STRUKTUREN

PROCEDE DE FABRICATION DE STRUCTURES EN NID D'ABEILLES

(84) Designated Contracting States:
**BE DE**

(30) Priority: **29.03.2001 JP 2001097698**

(43) Date of publication of application:
**02.01.2004 Bulletin 2004/01**

(73) Proprietors:
• **NGK INSULATORS, LTD.**
  **Nagoya-shi, Aichi 467-8530 (JP)**
• **KAO CORPORATION**
  **Chuo-ku,**
  **Tokyo (JP)**

(72) Inventors:
• **MAKINO, Kyoko**
  **Nagoya-shi, Aichi 467-8530 (JP)**
• **ISHIBASHI, Yoichi**
  **Wakayama-shi, Wakayama 640-8580 (JP)**

(74) Representative: **Paget, Hugh Charles Edward et al**
**Mewburn Ellis LLP**
**33 Gutter Lane**
**London**
**EC2V 8AS (GB)**

(56) References cited:
EP-A1- 0 652 191    EP-A1- 0 680 938
JP-A- 2 081 606    JP-A- 2001 179 720

EP 1 375 450 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a process for producing a honeycomb structure. More particularly, the present invention relates to a process for producing a honeycomb structure, which is superior in extrudability and productivity and wherein the load acting on the extruder used is low.

Background Art

In recent years, production of honeycomb structure has been conducted by a process using a continuous extruder.

This process using a continuous extruder conducts successively:

a step of feeding, into a continuous extruder, a ceramic raw material mixture obtained by adding, to a particulate ceramic raw material, a dispersing agent such as water or the like and an additive such as binder or the like, and transferring and kneading the raw material mixture using a twin screw or the like, to obtain a puddle, and
a step of extruding the puddle,

and can promise a very high productivity.

In such a production process, however, the ceramic raw material mixture having a relatively high viscosity receives a large amount of a mechanical energy from the equipment during kneading and consequently a large amount of heat is generated in the raw material mixture; as a result, the binder in the ceramic raw material mixture causes gelling during kneading and the ceramic raw material mixture hardens, and it is pointed out that inferior shaping arises owing to nonuniform kneading and, in some cases, the equipment has to be stopped forcibly.

Meanwhile, in JP-B-6-35126 was proposed a production process using a twin screw type continuous extruder, wherein a gel type binder having a predetermined viscosity is used and, by allowing the binder to have a high gelling temperature, the curing of a ceramic raw material mixture is prevented.

In this process, however, the pressure generated in the ceramic raw material mixture is not reduced at all; therefore, the load acting on the extruder is large and there have been problems, for example, the wear, damage, etc. of kneading blade and die and an increase in power consumption.

Further in this process, the ceramic raw material mixture is kneaded with its high viscosity being maintained; therefore, the individual components in the ceramic raw material mixture cannot be uniformized completely when the kneading is conducted in a short time as in a continuous extruder, and the process has had a problem of inferior shaping caused by nonuniform kneading.

In contrast, in JP-A-7-138076 was proposed a process in which a ceramic raw material mixture containing a shaping aid containing an emulsified wax or the wax and a fatty acid ester or a fatty acid soap is kneaded and extruded and thereby the puddle obtained by kneading is allowed to have improved fluidity and the pressure acting on the raw material mixture is reduced while the extrudate obtained retains its shape.

In this process, however, the reduction in the pressure acting on the raw material mixture, caused by the use of the shaping aid was not sufficient; therefore, it was necessary to use water or a dispersing agent in a relatively large amount in order to increase the fluidity of the puddle during extrusion and obtain an extrudate free from, for example, the damage of its external shape or the deformation of the cell (rib) of its honeycomb structure. As a result, the extrudate obtained had no sufficient shape retainability; there occurred, in some cases, the deformation of the honeycomb structure owing to its own weight; thus, the shaping of the honeycomb structure obtained finally was not always sufficient.

In this case, it is considered to reduce the addition amount of the water or the dispersing agent in order to enhance the shape retainability of the extrudate. However, the reduction of the water or the dispersing agent gives a puddle of insufficient fluidity; therefore, there occur, for example, the damage of the external shape of the extrudate and the deformation of the cell (rib) of the honeycomb structure, the honeycomb structure obtained finally has an inferior shape, and the extruder receives an increased load.

Further in the above process, the uniformization of the individual components of the ceramic raw material mixture was impossible by kneading in short time; therefore, in using a continuous extruder where kneading and extrusion are conducted successively and the kneading time is set to be short, there was a problem of inferior shaping due to nonuniform kneading.

In view of the above-mentioned problems, the present invention aims at providing a process for producing a honeycomb structure, which can produce a honeycomb structure of superior shape at a high productivity and wherein the load acting on the extruder used can be reduced.

Disclosure of the Invention

The present inventors made a study and found out that the above aim can be achieved by adding a dispersing agent composed mainly of a fatty acid salt having a neutralization degree specified in a particular range. The finding has led to the completion of the present invention.

According to the present invention there is provided a process for producing a honeycomb structure, which comprises adding, to a particulate ceramic raw material, at least water and a dispersing agent, kneading a resultant mixture to obtain a puddle, and extruding the puddle, **characterized in that** the dispersing agent is composed mainly of a fatty acid salt having a neutralization degree of 58% to less than 100%, preferably 58% to less than 99%, more preferably 71% to less than 95%, particularly preferably 77% to less than 90%.

In the present process, such a dispersing agent is added in an amount of preferably 0.1 to 2 parts by weight (in terms of the solid content) relative to 100 parts by weight of the particulate ceramic raw material.

Also in the present process, the particulate ceramic raw material is preferably composed mainly of raw materials capable of forming cordierite. Further, the present process preferably conducts successively:

a step of feeding, into a continuous extruder, a ceramic raw material mixture obtained by adding at least water and a dispersing agent to a particulate ceramic raw material and kneading the ceramic raw material mixture to obtain a puddle, and

a step of extruding the puddle.

Brief Description of the Drawings

Fig. 1 is a graph showing the results of the tests which were conducted to calculate the reduction in peak torque, represented by the general formula (1), in order to determine the effect of the present invention.

Fig. 2 is a graph showing a relation between neutralization degree and reduction in peak torque when there were used various dispersing agents each composed of a fatty acid salt of different neutralization degree.

Best Mode for Carrying Out the Invention

The mode for carrying out the present invention is described specifically below.

The process for producing a honeycomb structure according to the present invention comprises adding, to a particulate ceramic raw material, at least water and a dispersing agent composed mainly of a fatty acid salt having a neutralization degree of 58% to less than 100%, kneading the mixture to obtain a puddle, and extruding the puddle.

There is no particular restriction as to the particulate ceramic raw material used in the present invention. However, there can be mentioned, for example, a ceramic raw material containing one or more kinds selected from silicon, titanium, zirconium, silicon carbide, boron carbide, titanium carbide, zirconium carbide, silicon nitride, boron nitride, aluminum nitride, aluminum oxide, zirconium oxide, mullite, raw materials capable of forming cordierite, aluminum titanate, sialon, kaolin, talc, aluminum hydroxide, fused silica and quartz.

The particulate ceramic raw material may also be a mixture of the above ceramic and, for example, a metal such as copper, aluminum, iron, nickel.

The dispersing agent used in the present invention is composed mainly of a fatty acid salt having a neutralization degree of 58% to less than 100%, preferably a fatty acid salt having a neutralization degree of 58% to less than 99%, more preferably a fatty acid salt having a neutralization degree of 71% to less than 95%, particularly preferably a fatty acid salt having a neutralization degree of 77% to less than 90%.

When the neutralization degree is less than 58%, the dispersing agent does not act on the particulate ceramic raw material or the binder and causes self-agglomeration; therefore, there decrease (1) the effect of reducing the pressure acting on the ceramic raw material mixture during extrusion of puddle and the heat generated in the ceramic raw material mixture, (2) the effect of reducing the load acting on the extruder, and (3) the effect of promoting quick uniformization. Meanwhile, when the neutralization degree is 100% or more, the proportion of free metal ion (base moiety) is high and the metal ion acts so as to separate the dispersing agent from the particulate ceramic raw material and the binder; as a result, the above-mentioned effects decrease as well.

Herein, the neutralization degree refers to a ratio of the equivalent of counter ion present in dispersing agent when the equivalent of total fatty acids in dispersing agent is taken as 100%.

The dispersing agent is produced, for example, by preparing an aqueous solution containing a predetermined concentration of a hydroxide having a required base moiety, such as sodium hydroxide, potassium hydroxide or the like, keeping the aqueous solution, with stirring, at a temperature not lower than the melting point (measured by JIS K 0065) of a fatty acid corresponding to the fatty acid moiety of an intended fatty acid salt, adding, to the aqueous hydroxide solution, a fatty acid corresponding to the fatty acid moiety of the intended fatty acid salt, and stirring the resulting mixture. In this case, the amounts of the aqueous hydroxide solution and the fatty acid, which are mixed each other, are determined so that the base in the hydroxide and the fatty acid give an equivalent ratio corresponding to a required neutralization degree, in terms of their solid contents.

The fatty acid salt used as the major component of the dispersing agent may be any of a saturated fatty acid salt and an unsaturated fatty acid salt, or any of a straight-chain fatty acid salt and a branched chain fatty acid salt. However, as the dispersing agent in the present invention, a salt of a fatty acid having 8 to 22 carbon atoms is preferred and a salt of a fatty acid having 10 to 18 carbon atoms is more preferred.

Preferred specific examples of the fatty acid salt are those fatty acid salts having, as the fatty acid moiety, caprylic acid, capric acid, lauric acid, myristic acid, palmitic acid, stearic acid, arachic acid, behenic acid, palmitoleic acid, oleic acid, elaidic acid, linolic acid, linoleic acid, erucic acid, licinoleic acid or the like.

With a salt of a fatty acid having 8 to 22 carbon atoms, its kneading with the ceramic raw material mixture is easy and, moreover, a larger dispersion effect can be obtained.

As the "base moiety" of the fatty acid salt, there can be mentioned, for example, alkali metals such as sodium, potassium; alkaline earth metals such as calcium, magnesium; and ammonia. Of these, fatty acid salts having sodium or potassium as the base moiety are preferred because they can more effectively reduce the pressure acting on the ceramic raw material mixture and the heat generated in the ceramic raw material mixture and can more quickly uniformize the individual components in the ceramic raw material mixture during its kneading. The fatty acid salt dissociates in the dispersing agent, and both the fatty acid moiety and the base moiety are present therein as respective ions.

The dispersing agent used in the present invention can as necessary contain, for example, a wetting agent such as ethylene glycol, dipropylene glycol, glycerine or the like; and a nonionic surfactant such as alkylene oxide adduct of higher alcohol, sorbitan ester, alkylene oxide adduct of sorbitan ester, polyalcohol ester, alkylene oxide adduct of polyalcohol, alkylene oxide adduct of polyalcohol ester and the like. These components other than fatty acid salts are contained in the dispersing agent in an amount of preferably 0 to 80% by mass, more preferably 0 to 50% by weight.

In the present invention, the dispersing agent is added in an amount of preferably 0.1 to 2 parts by weight (in terms of the value of the solid content), more preferably 0.1 to 1.0 part by weight (in terms of the value of the solid content) relative to 100 parts by weight of the particulate ceramic raw material.

When the addition amount of the dispersing agent is within the above range, the affinity between the dispersing agent and the ceramic raw material mixture is good; therefore, it is possible to uniformize the individual components of the ceramic raw material mixture by short-time kneading and can sufficiently reduce the pressure acting on the ceramic raw material mixture in extrusion of puddle and the heat generated in the ceramic raw material mixture; as a result, a honeycomb structure of superior shape can be obtained by short-time kneading with no very large load acting on the extruder used.

The water used as a dispersing medium in the present invention is added in an amount of preferably 25 to 35 parts by weight, more preferably 28 to 32 parts by weight relative to 100 parts by weight of the particulate ceramic raw material.

In the present invention, there can be used, besides, additives such as binder, assistant for crystal growth, hole-making agent and the like as necessary.

As the binder, there can be mentioned, for example, water-soluble cellulose derivatives such as hydroxypropyl methyl cellulose, hydroxypropyl ethyl cellulose, methyl cellulose, hydroxyethyl cellulose, carboxymethyl cellulose; and polyvinyl alcohol.

As the assistant for crystal growth, there can be mentioned, for example, magnesia, silica, yttria and iron oxide. As an agent for forming micropores, there can be mentioned, for example, graphite, wheat flour, starch, phenolic resin and polyethylene terephthalate.

In the present invention, kneading and extrusion can be conducted, for example, by conducting kneading using a vacuum pug mill to obtain a cylindrical puddle and then extruding the puddle from a ram extruder to obtain a honeycomb structure extrudate.

In the present invention, as mentioned previously, the pressure acting on the ceramic raw material mixture during extrusion of puddle and the heat generated in the ceramic raw material mixture are reduced greatly and, moreover, the individual components in the ceramic raw material mixture can be uniformized quickly in the kneading. Therefore, in the present invention, it is preferred to successively conduct:

a step of feeding, into a continuous extruder of twin screw type or the like, having high requirements for these properties, a ceramic raw material mixture comprising a particulate ceramic raw material, a dispersing agent, water and an additive added as necessary and kneading the ceramic raw material mixture in the extruder to obtain a puddle, and

a step of extruding the puddle. Thereby, a honeycomb structure can be produced at a very high productivity.

In the present invention, there is no particular restriction as to the step conducted after extrusion. Drying and firing may be conducted under the conditions ordinarily employed.

The present invention is described more specifically below by way of Examples. However, the present invention is in no way restricted by these Examples.

1. Methods of evaluation

In each Example or each Comparative Example, reduction in peak torque and shaping of honeycomb structure were determined by the following methods, and the reduction in pressure generated in ceramic raw material mixture and the shaping of honeycomb structure were evaluated.

(Reduction in peak torque)

The raw material batch used in each Example or each Comparative Example was kneaded using a Banbury type kneader having a torque meter fitted to the blade; and the torque applied to the blade of the kneader during the kneading was measured with the passage of a time. This operation was conducted also for a raw material batch of the same composition except that no dispersing agent was used.

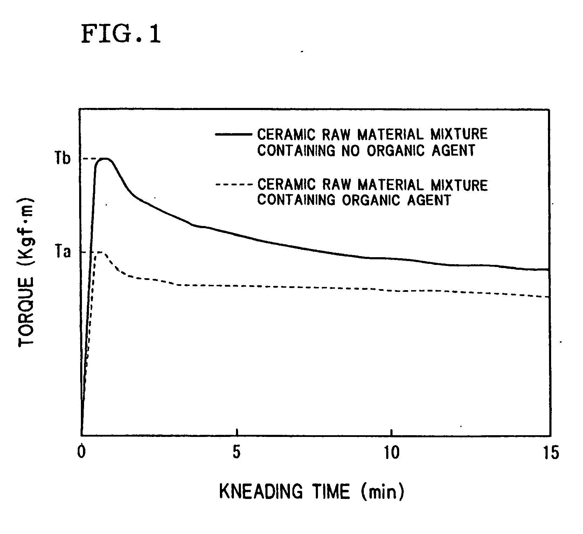

As shown in Fig. 1, in each of the cases containing a dispersing agent and the cases containing no dispersing agent, the torque increases rapidly immediately after the start of kneading of raw material batch, reaches a peak in a short time, thereafter decreases slowly and, after a certain period, becomes substantially constant.

Meanwhile, when a dispersing agent is added, as compared with when no dispersing agent is added, the torque is small overall, and the reduction in torque is most striking at the peak torque.

Hence, reduction ($\Delta$T) in peak torque was calculated from the peak torque when a dispersing agent was added and the peak torque when no dispersing agent was added, using the general formula (1) shown below. With this reduction in peak torque, the reduction in pressure appearing in the ceramic raw material mixture was evaluated.

$$\triangle \text{T} = (\text{Tb} - \text{Ta})/\text{Tb} \times 100 \qquad (1)$$

[In the general formula (1), Ta is a peak torque during kneading when a ceramic raw material mixture containing a dispersing agent has been used, and Tb is a peak torque during kneading when a ceramic raw material mixture containing no dispersing agent has been used.]

(Shaping)

A honeycomb structure extrudate obtained in each Example or each Comparative Example was visually observed for external shape to evaluate the extrudability of the honeycomb structure. The evaluation was made based on the following standard.

○:     There was no deformation in the cells (ribs) of honeycomb structure.
△:     There was minor deformation in the cells (ribs) of honeycomb structure.
X:     There was major deformation in the cells (ribs) of honeycomb structure.

2. Examples and Comparative Examples

(Example 1)

First, 100 parts by weight of particulate raw materials capable of forming cordierite, consisting of 39% by mass of talc, 15% by mass of kaolin, 15% by mass of calcinated kaolin, 8% by mass of alumina, 17% by mass of aluminum hydroxide and 6% by mass of silica were mixed with 5 parts by weight of hydroxypropyl methyl cellulose (a binder), 27 parts by weight of water (a dispersing medium) and 0.6 part by weight (in terms of solid content) of potassium laurate (a dispersing agent) having a neutralization degree of 60%, to prepare a ceramic raw material mixture.

The above dispersing agent having a neutralization degree of 60% was prepared by keeping an aqueous solution containing 40% by mass of potassium hydroxide, with stirring, at a 47˚C which was higher than the melting point (measured by JIS K 0065) of lauric acid, adding 100 parts by weight of lauric acid to 16.8 parts by weight (in terms of solid content) of the aqueous potassium hydroxide solution, and stirring the resulting mixture.

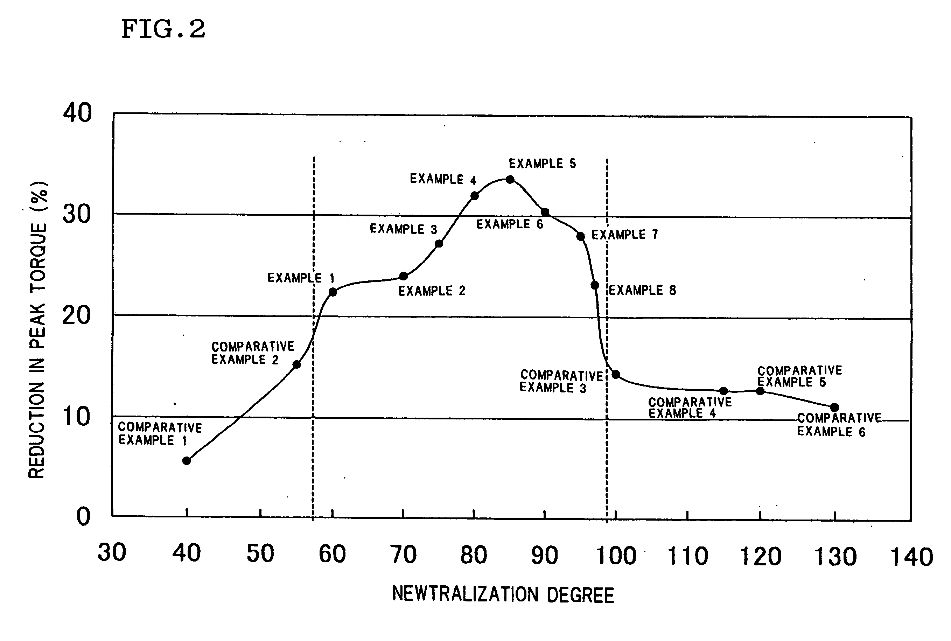

Next, the ceramic raw material mixture was fed into a twin screw type continuous extruder to successively conduct the kneading of the ceramic raw material mixture and the extrusion of the resulting puddle; thereby, a honeycomb structure extrudate was produced. The neutralization degree of the fatty acid used and the obtained reduction in peak torque are shown in both Table 1 and Fig. 2.

(Examples 2 to 8 and Comparative Examples 1 to 6)

Honeycomb structure extrudates were produced in the same manner as in Example 1 except that the neutralization degree of the potassium laurate (a dispersing agent) added to the particulate raw materials capable of forming cordierite was changed to 70, 75, 80, 85, 90, 95, 97, 40, 55, 100, 115, 120 or 130%. Each neutralization degree of the fatty acid used and each obtained reduction in peak torque are shown in both Table 1 and Fig. 2.

(Examples 9 to 15 and Comparative Examples 7 to 14)

Honeycomb structure extrudates were produced in the same manner as in Example 1 except that those dispersing agents shown in Table 2 were used.

Table 1

|  | Neutralization degree (%) | Reduction in peak torque (%) |
|---|---|---|
| Comparative Example 1 | 40 | 5.6 |
| Comparative Example 2 | 55 | 15.2 |
| Example 1 | 60 | 22.4 |
| Example 2 | 70 | 24 |
| Example 3 | 75 | 27.2 |
| Example 4 | 80 | 32 |
| Example 5 | 85 | 33.6 |
| Example 6 | 90 | 30.4 |
| Example 7 | 95 | 28 |
| Example 8 | 97 | 23.2 |
| Comparative Example 3 | 100 | 14.4 |
| Comparative Example 4 | 115 | 12.8 |
| Comparative Example 5 | 120 | 12.8 |
| Comparative Example 6 | 130 | 11.2 |

Table 2

|  | Dispersing agent | | | | Reduction in peak torque (%) |
|---|---|---|---|---|---|
|  | Fatty acid moiety | Carbon atoms of fatty acid moiety | Base moiety | Neutralization degree (%) |  |
| Example 9 | Capric acid | 10 | Sodium | 60 | 22 |
| Example 10 | Palmitic acid | 16 | Ammonium | 70 | 26 |
| Example 11 | Lauric acid | 12 | Potassium | 98 | 23.2 |
| Example 12 | Myristic acid | 14 | Magnesium | 75 | 26 |
| Example 13 | Lauric acid | 12 | Sodium | 95 | 30 |
| Example 14 | Coconut oil fatty acid | 8,10,12,14,16,18 | Calcium | 90 | 28 |

(continued)

| | Dispersing agent | | | | Reduction in peak torque (%) |
|---|---|---|---|---|---|
| | Fatty acid moiety | Carbon atoms of fatty acid moiety | Base moiety | Neutralization degree (%) | |
| Example 15 | Oleic acid | 18 | Potassium | 85 | 30 |
| Comparative Example 7 | Linolic acid | 18 | Sodium | 101 | 18 |
| Comparative Example 8 | Lauric acid | 12 | Ammonium | 55 | 18 |
| Comparative Example 9 | Myristic acid | 14 | Magnesium | 115 | 16 |
| Comparative Example 10 | Lauric acid | 12 | Potassium | 50 | 10 |
| Comparitive Example 11 | Beef tallow fatty acid | 14,16,18 | Calcium | 120 | 2 |
| Comparative Example 12 | Coconut oil fatty acid | 8,10,12,14,16,18 | Sodium | 40 | 8 |
| Comparative Example 13 | Oleic acid | 18 | Magnesium | 130 | 16 |
| Comparative Example 14 | Stearic acid | 18 | Potassium | 110 | 15 |

3. Results of evaluation

(Examples 1 to 8 and Comparative Examples 1 to 6)

In Examples 1 to 8 and Comparative Examples 1 to 6, relations between the neutralization degree of fatty acid salt and the obtained reduction in peak torque were examined under the same conditions except that the neutralization degree of the potassium laurate added as a dispersing agent to the particulate raw materials capable of forming cordierite, was varied from 40% to 130% at given intervals. As shown in Fig. 2, there were sharp changes in the reduction in peak torque at around a 57% neutralization degree and around a 100% neutralization degree; in each of Examples 1 to 8 wherein the neutralization degree was set in a range of 58% to less than 100%, the reduction in peak torque was 22.4 to 33.6% and the reduction in the pressure acting on the raw material mixture was large.

Interestingly, there were sharper changes in the reduction in peak torque at around a 70% neutralization degree and around a 90% neutralization degree; in each of Examples 3 to 6 wherein the neutralization degree was set in a range of 71% to less than 95%, the reduction in peak torque was 27.6 to 33.6% and the reduction in the pressure acting on the raw material mixture was large; in Examples 4 and 5 wherein each neutralization degree was set in a range of 77% to less than 90%, the reductions in peak torque were 32.0% and 33.6% and the reduction in the pressure acting on the raw material mixture was particularly large.

In contrast, in each of Comparative Examples 1 and 2 wherein the neutralization degree of the potassium laurate used as a dispersing agent was set at less than 57%, the reduction in peak torque was 15.2% or less and the reduction in the pressure acting on the raw material mixture was small. Similarly, in each of Comparative Examples 3 to 6 wherein the neutralization degree of the potassium laurate used as a dispersing agent was set at a high level of 100% or more, the reduction in peak torque was 14.4% or less and the reduction in the pressure acting on the raw material mixture was small.

(Examples 9 to 15 and Comparative Examples 7 to 14)

In Examples 9 to 15 and Comparative Examples 7 to 14, relations between the neutralization degree of fatty acid salt and the reduction in peak torque/extrudability were examined under the same conditions except that various fatty acid salts each having a different fatty acid moiety and a different base moiety were used. In each of Examples 9 to 15 wherein the neutralization degree of the fatty acid salt was set in a range of 57% to less than 100%, the reduction in peak torque was 22 to 30% and the reduction in the pressure acting on the raw material mixture was large. Further, each extrudate obtained in Examples had an almost good shape although some extrudates showed minor deformation. Incidentally, as the reduction in the pressure acting on the raw material mixture was larger, the obtained extrudate tended to have a better shape and there was a correlation between the reduction and the shape.

In contrast, in each of Comparative Examples 7 to 14 wherein the neutralization degree of the fatty acid salt was set at less than 57% or at 100% or more, the reduction in peak torque was 18% or less and the reduction in the pressure acting on the raw material mixture was small. Further, each extrudate obtained in Comparative Examples had deformation and the deformation of the extrudate was large in most of Comparative Examples.

Industrial Applicability

As described above, the present invention allows production of a honeycomb structure of superior shape at a high productivity and can provide a process for producing a honeycomb structure, wherein the load applied to the extruder used is small and the life of the extruder is extended. In the present invention, in particular, the pressure acting on the raw materials and the heat generated in the raw materials are reduced greatly and the individual components in the raw materials can be uniformized quickly; therefore, there can be provided a process for producing a honeycomb structure, which is particularly suitable in using a continuous extruder.

**Claims**

1. A process for producing a honeycomb structure, which comprises adding, to a particulate ceramic raw material, at least water and a dispersing agent, kneading a resultant mixture to obtain a puddle, and extruding the puddle, **characterized in that** the dispersing agent is composed mainly of a fatty acid salt having a neutralization degree of 58% to less than 100%.

2. A process for producing a honeycomb structure according to Claim 1, wherein the dispersing agent is added in an amount of 0.1 to 2 parts by weight (in terms of the solid content) relative to 100 parts by weight of the particulate ceramic raw material.

3. A process for producing a honeycomb structure according to Claim 1 or 2, wherein to the particulate ceramic raw material is further added a binder composed of a water-soluble cellulose derivative.

4. A process for producing a honeycomb structure according to any of Claims 1 to 3, wherein the particulate ceramic raw material is composed mainly of raw materials capable of forming cordierite.

5. A process for producing a honeycomb structure according to any of Claims 1 to 4, which conducts successively:

   a step of feeding, into a continuous extruder, a ceramic raw material mixture obtained by adding at least water and a dispersing agent to a particulate ceramic raw material and kneading the ceramic raw material mixture to obtain a puddle, and
   a step of extruding the puddle.

**Patentansprüche**

1. Verfahren zur Herstellung wabenförmiger Strukturen, umfassend ein Zugeben zu einem partikulären Keramikrohmaterial von zumindest Wasser und einem Dispergiermittel, das Kneten eines daraus resultierenden Gemischs zur Erhaltung eines Lehmschlags und das Extrudieren des Lehmschlags, **dadurch gekennzeichnet, dass** das Dispergiermittel hauptsächlich aus einem Fettsäuresalz mit einem Neutralisierungsgrad von 58 % bis weniger als 100 % besteht.

2. Verfahren zur Herstellung wabenförmiger Strukturen nach Anspruch 1, worin das Dispergiermittel in einer Menge von 0,1 bis 2 Gewichtsteilen (bezogen auf den Feststoffgehalt), bezogen auf 100 Gewichtsteile des partikulären Keramikrohmaterials, zugesetzt wird.

3. Verfahren zur Herstellung wabenförmiger Strukturen nach Anspruch 1 oder 2, worin zu dem partikulären Keramikrohmaterial weiters ein aus einem wasserlöslichen Cellulosederivat bestehendes Bindemittel zugesetzt wird.

4. Verfahren zur Herstellung wabenförmiger Strukturen nach einem der Ansprüche 1 bis 3, worin das partikuläre Keramikrohmaterial hauptsächlich aus Rohmaterialien besteht, die Cordierit bilden können.

5. Verfahren zur Herstellung wabenförmiger Strukturen nach einem der Ansprüche 1 bis 4, worin Folgendes nacheinander durchgeführt wird:

ein Schritt zum Zuführen in einen kontinuierlichen Extruder eines Keramikrohmaterialgemischs, das durch Zugeben von zumindest Wasser und einem Dispergiermittel zu einem partikulären Keramikrohmaterial und Kneten des Keramikrohmaterialgemischs zum Erhalt eines Lehmschlags erhalten wird, und
ein Schritt zum Extrudieren des Lehmschlags.


**Revendications**

1. Procédé de fabrication d'une structure en nid d'abeilles qui comprend l'ajout, à une matière première en céramique particulaire, d'au moins de l'eau et un agent de dispersion, le malaxage d'un mélange résultant pour obtenir un corroi et l'extrusion du corroi, **caractérisé en ce que** l'agent de dispersion est composé principalement d'un sel d'acide gras présentant un degré de neutralisation de 58 % à moins de 100 %.

2. Procédé de fabrication d'une structure en nid d'abeilles selon la revendication 1, dans lequel l'agent de dispersion est ajouté en une quantité de 0,1 à 2 parties en poids (en termes de teneur en solides) par rapport à 100 parties en poids de la matière première en céramique particulaire.

3. Procédé de fabrication d'une structure en nid d'abeilles selon la revendication 1 ou 2, dans lequel on ajoute en outre à la matière première en céramique particulaire un liant composé d'un dérivé de cellulose soluble dans l'eau.

4. Procédé de fabrication d'une structure en nid d'abeilles selon l'une quelconque des revendications 1 à 3, dans lequel la matière première en céramique particulaire est composée principalement de matières premières capables de former une cordiérite.

5. Procédé de fabrication d'une structure en nid d'abeilles selon l'une quelconque des revendications 1 à 4, qui conduit successivement :

une étape de fourniture, dans une extrudeuse en continu, d'un mélange de matière première en céramique, obtenu par l'ajout d'au moins de l'eau et un agent de dispersion à une matière première en céramique particulaire et le malaxage du mélange de matière première en céramique afin d'obtenir un corroi, et
une étape d'extrusion du corroi.

# FIG.1

EP 1 375 450 B1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6035126 B

- JP 7138076 A